# EUROPÄISCHE PATENTSCHRIFT

(11) **EP 2 497 368 B1**
(45) Veröffentlichungstag und Bekanntmachung des Hinweises auf die Patenterteilung: **28.08.2013**
(21) Anmeldenummer: 11001863.7
(22) Anmeldetag: 07.03.2011
(51) Int. Cl.: A23C 9/142, A23J 1/20

(54) **Verfahren zur Gewinnung eines eiweissangereicherten Erzeugnisses aus Molkenproteinkonzentrat**
Method for obtaining a protein-enriched product from a whey protein concentrate
Procédé d'obtention d'un produit enrichi en protéines à partir d'un concentré protéinique du petit-lait

(43) Veröffentlichungstag der Anmeldung: 12.09.2012
(73) Patentinhaber: Molkerei Alois Müller GmbH & Co. KG, 86850 Aretsried (DE)
(72) Erfinder: Lehmann, Hanno, 59846 Sundern (DE)
(74) Vertreter: Leinweber & Zimmermann

(56) Entgegenhaltungen:
- WO-A1-02/080695
- DE-A1- 3 800 468
- KIESNER C: "AKTUELLE ENTWICKLUNGEN IN DER VERARBEITUNGSTECHNIK VON MILCH UND MILCHERZEUGNISSEN", KIELER WIRTSCHAFTLICHE FORSCHUNGSBERICHTE, VERLAG TH. MANN, GELSENKIRCHEN, DE, Bd. 53, Nr. 1, 1. Januar 2001 (2001-01-01) , Seiten 43-68, XP008016245, ISSN: 0023-1347

## Beschreibung

Die Erfindung bezieht sich auf ein Verfahren zur Gewinnung eines eiweißangereicherten Erzeugnisses aus einem als Retentat einer Ultrafiltration von Molke gewonnenen Molkenproteinkonzentrat, bei dem das Molkenproteinkonzentrat als Zulaufstrom einer Mikrofiltration zugeführt und aus deren Permeatstrom das eiweißangereicherte Erzeugnis gewonnen wird, wobei von dem Retentatstrom der Mikrofiltration ein fettreduzierter Teilstrom separiert und mindestens teilweise zu der Mikrofiltration rezirkuliert wird.

Das bei derartigen bekannten Verfahren als Retentat einer Ultrafiltration von Molke gewonnene Molkenproteinkonzentrat wird abkürzend auch als "WPC" (Whey Protein Concentrate) bezeichnet. Es enthält neben einem gegenüber Molke erhöhten Eiweißanteil auch einen Anteil von Restfetten der Molke. Die Erhöhung der Eiweißkonzentration ist insbesondere für Ernährungszwecke wünschenswert, wogegen der Fettanteil unerwünscht ist. Zur Verringerung dieses unerwünschten Fettanteils wird das Molkenproteinkonzentrat einer Mikrofiltration unterzogen. Im Permeat dieser Mikrofiltration ist der Fettanteil gegenüber dem des Molkenproteinkonzentrats stark herabgesetzt, so daß aus diesem Permeat ein stark fettreduziertes, eiweißangereichertes Erzeugnis gewonnen werden kann. Bei der Mikrofiltration geht jedoch ein nennenswerter Anteil an Eiweiß an das Retentat der Mikrofiltration verloren, wodurch die Gesamtausbeute herabgesetzt wird.

Bei einem bekannten Verfahren der eingangs genannten Art (WO 02/080695 A1) soll die Leistung einer der Separation des fettreduzierten Teilstroms dienenden Separationszentrifuge durch die eingangsseitige Zugabe des Retentatstroms der Mikrofiltration erhöht werden, wobei der separierte fettreduzierte Teilstrom insgesamt zur Mikrofiltration rezirkuliert wird.

Weiterhin ist es bekannt (DE 38 00 468 A1), einem Klärseparator zuzuführende Molke durch Anhebung ihres pH-Wertes, anschließende Erhitzung und Zugabe von Kalziumchlorid vorzubehandeln.

Der Erfindung liegt die Aufgabe zugrunde, bei einem Verfahren der eingangs genannten Art die Gesamtausbeute zu verbessern.

Erfindungsgemäß wird diese Aufgabe dadurch gelöst, daß die Menge des rezirkulierten Teilstroms im Bereich von 25 bis 75 % der Menge des separierten Teilstroms liegt.

Bei der Mikrofiltration geht ein Teil des in dem zulaufenden Molkenproteinkonzentrat enthaltenen Eiweißes in den Retentatstrom über. Dadurch verringert sich der in dem Permeatstrom ausgetragene Eiweißanteil. In der Praxis liegt die Eiweißausbeute im Permeatstrom im Bereich von 75 bis 80 % des in dem zulaufenden Molkenproteinkonzentrat vorhandenen Eiweißgehalts. Durch die erfindungsgemäße Rezirkulation des von dem Retentatstrom der Mikrofiltration separierten fettreduzierten Teilstroms wird eine deutliche Erhöhung der Eiweißausbeute im Permeatstrom der Mikrofiltration erreicht und dennoch der Fettanteil im Permeatstrom auf erwünscht niedrigen Werten gehalten. In der Praxis liegt diese Ausbeutesteigerung beispielsweise im Bereich von 5 bis 10 % des in dem zulaufenden Molkenproteinkonzentrat vorhandenen Eiweißanteils. Die Werte für die Ausbeutesteigerung und die Unterdrückung des Fettanteils hängen von der Rezirkulationsmenge ab. Das erfindungsgemäße Verfahren kann mit zufriedenstellendem Erfolg ausgeführt werden, wenn die Menge des rezirkulierten Teilstroms im Bereich von 25 bis 75 % der Menge des separierten, fettreduzierten Teilstroms oder der Menge des Retentatstroms der Mikrofiltration liegt.

Der mit dem rezirkulierten Teilstrom rezirkulierte Restfettgehalt wird entsprechend dem für Fett geltenden Trenngrad der Mikrofiltration, also entsprechend deren natürlichem Entfettungsgrad, von der Mikrofiltrationsmembrane zurückgehalten, so daß in den Permeatstrom nur ein entsprechend geringer Bruchteil des Restfettgehalts übergeht. Beispielsweise liegt der natürliche Entfettungsgrad der Mikrofiltration im Bereich von 75 bis 80 %. Dann reduziert sich der in das Permeat übergehende Bruchteil auf einen Wert im Bereich von 20 bis 25 % des rezirkulierten Restfettgehalts.

Zweckmäßigerweise ist vorgesehen, daß vor der Separation des fettreduzierten Teilstroms der pH-Wert des Retentatstroms eingestellt, der in seinem pH-Wert eingestellte Retentatstrom erhitzt und die bivalente Metallionenkonzentration des erhitzten Retentatstroms erhöht wird. Die Einstellung des pH-Wertes vor der Erhitzung und die Erhöhung der bivalenten Metallionenkonzentration nach der Erhitzung bewirken eine Aggregation der Restfettpartikel und erleichtern dadurch die Separation des fettreduzierten Teilstroms. Die Separation wird weiterhin dadurch begünstigt, daß vorteilhaft der in seinem pH-Wert und seiner bivalenten Metallionenkonzentration eingestellte und erhitzte Retentatstrom der Separation über eine Heißhaltestrecke zugeführt wird.

In der Praxis liegt zweckmäßigerweise die Verweilzeit in der Heißhaltestrecke im Bereich von zwei bis zehn Minuten. Ferner liegt die Erhitzungstemperatur des Retentatstroms im Bereich von 50 bis 65 °C. Die Einstellung des pH-Wertes erfolgt auf einen Wert im Bereich von 6,4 bis 7,0 durch eine Zugabe von Lauge, beispielsweise Kalilauge oder Natronlauge. Die Erhöhung der bivalenten Metallionenkonzentration erfolgt durch eine Zugabe von Kalziumchlorid.

Vorzugsweise wird der fettreduzierte Teilstrom aus dem erhitzten Retentatstrom mittels eines Tellerseparators absepariert. Der Tellerseparator kann als Zweiphasen-Separator ausgebildet sein, der auch als Klärseparator bezeichnet wird und dessen die leichte Phase austragender Austragsstrom den fettreduzierten Teilstrom liefert. Alternativ kann der Tellerseparator ein Dreiphasen-Separator sein, der auch als Trennseparator bezeichnet wird und dessen die schwere Phase austragender Austragsstrom den fettreduzierten Teilstrom liefert.

Im Rahmen der Erfindung ist ferner vorgesehen, daß das eiweißangereicherte Erzeugnis aus einem Retentatstrom einer weiteren Ultrafiltration gewonnen wird, der der Permeatstrom der Mikrofiltration als Zulaufstrom zugeführt wird. Durch die weitere Ultrafiltration wird der eiweißangereicherte und fettreduzierte Permeatstrom der Mikrofiltration weiter fraktioniert und gereinigt. Der Retentatstrom dieser weiteren Ultrafiltration liefert ein hoch eiweißangereichertes und stark fettreduziertes Erzeugnis, dessen Eiweißgehalt beispielsweise bei oder über 90 % liegt und dessen Fettgehalt kleiner als 1 % ist. Dieses Erzeugnis wird abkürzend auch als WPI (Whey Protein Isolate) bezeichnet.

In der folgenden Beschreibung wird die Erfindung unter Bezugnahme auf die Zeichnung beispielhaft erläutert. Hierin zeigen:
- Fig. 1: ein Blockschema eines Verfahrensablaufs, in dem die Erfindung ange-wendet wird,
- Fig. 2: eine detailliertere Darstellung eines Ausschnittes von Fig. 1, und
- Fig. 3 (a) und 3 (b): je ein Schema zur Erläuterung der Separationswirkung in einem Klär-separator bzw. einem Trennseparator.

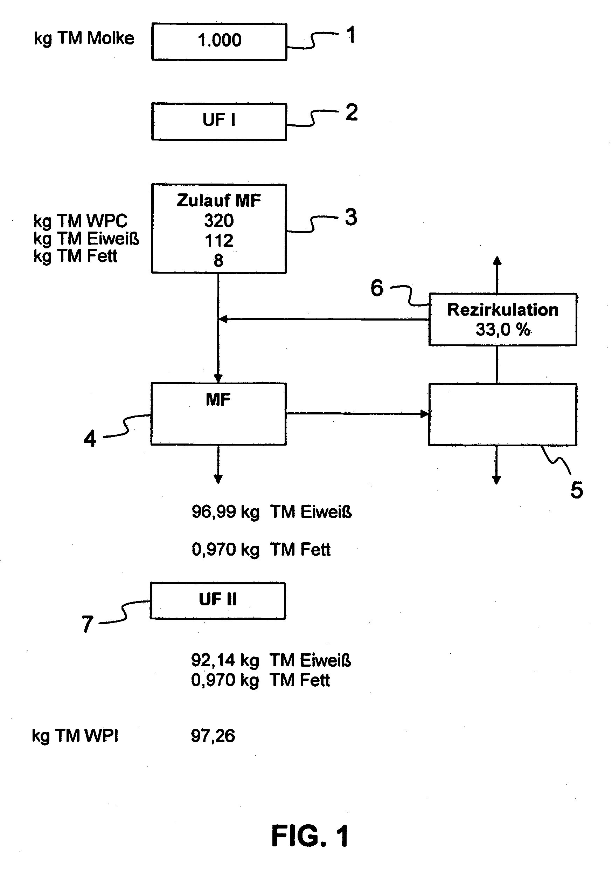

In Fig. 1 symbolisiert ein Block 1 Molke als Ausgangsprodukt des dargestellten Verfahrensablaufs. Zur Erläuterung der bei diesem Verfahrensablauf auftretenden Mengenbilanzen ist in dem Block 1 lediglich beispielhaft ein Gesamtdurchsatz von Molke mit einem Gehalt von 1.000 kg Trockenmasse (TM) angenommen. Die Molke wird einer Ultrafiltrationsstufe 2 zugeleitet, in der sie in ein Permeat und ein Retentat fraktioniert wird. Das Permeat dieser Ultrafiltration, in dem insbesondere die Laktose und Mineralstoffe der Molke angereichert sind, wird einer in Fig. 1 nicht dargestellten Weiterverwendung zugeführt.

In dem Retentat der Ultrafiltration sind die Molkenproteine angereichert. Außerdem enthält das Retentat einen Restanteil an Molkefett. Für dieses Molkenproteinkonzentrat, das abkürzend auch als "WPC" (Whey Protein Concentrate) bezeichnet wird, ist in dem Block 3 die sich aus der in Block 1 angegebenen Mengenbilanz unter praxisbezogenen Annahmen errechnende Mengenbilanz an WPC, nämlich 320 kg TM, angegeben. Hierin sind 112 kg TM Eiweiß und 8 kg TM Fett enthalten.

Das solchermaßen zusammengesetzte Molkenproteinkonzentrat wird als Zulaufstrom einer Mikrofiltrationsstufe 4 zugeführt. Bei dieser Mikrofiltration geht die Eiweißfraktion des zugeführten Molkenproteinkonzentrats größtenteils in das Permeat der Mikrofiltrationsstufe 4 über. Dagegen ist der Fettgehalt dieses Permeats stark reduziert.

Ein kleinerer Teil der Eiweißfraktion und ein größerer Teil der Fettfraktion gehen in das Retentat der Mikrofiltration über. In einer Separationsstufe 5 wird aus dem Retentatstrom der Mikrofiltrationsstufe 4 ein fettreduzierter Teilstrom separiert. Ein Block 6 symbolisiert die Rezirkulation eines Anteils dieses Teilstroms zum Zulauf der Mikrofiltrationsstufe 4. Die Größe dieses Anteils ist in dem Block 6 mit 33,0 % angegeben. Tatsächlich kann die Größe des Anteils in Abhängigkeit von den in der Praxis vorliegenden Umständen zur Einstellung einer optimalen Ausbeute in einem weiten Bereich variiert werden, beispielsweise im Bereich von 25 bis 75 % des in der Separationsstufe 5 abgetrennten fettreduzierten Teilstroms.

Mit dieser Rezirkulation errechnet sich für die in Fig. 1 beispielhaft zugrunde gelegte Mengenbilanz in dem Permeat der Mikrofiltrationsstufe 4 ein Gehalt von 96,99 kg TM Eiweiß und 0,97 kg TM Fett. Würde man dagegen den Prozeß ohne die Rezirkulation ablaufen lassen, enthielte das Permeat der Mikrofiltrationsstufe 4 nur 89,60 kg TM Eiweiß bei 0,4 kg TM Fett. Dies bedeutet eine Steigerung der Eiweißausbeute um 8,25 %. Gleichzeitig bleibt der prozentuale Fettgehalt noch unter einem für Ernährungszwecke erwünschten Grenzwert von 1 %.

In dem in Fig. 1 dargestellten Gesamtprozeß wird das Permeat der Mikrofiltrationsstufe 4 noch einer zur Reinigung und weiteren Fraktionierung dienenden Nachbehandlung unterzogen. Hierfür wird der Permeatstrom einer weiteren Ultrafiltrationsstufe 7 als Zulaufstrom zugeführt. Deren Retentatstrom liefert ein unmittelbar anwendbares, eiweißangereichertes Erzeugnis mit einem Eiweißgehalt von 90 % und einem Fettgehalt von 0,95 %. Ein solches Erzeugnis wird abkürzend als "WPI" (Whey Protein Isolate) bezeichnet.

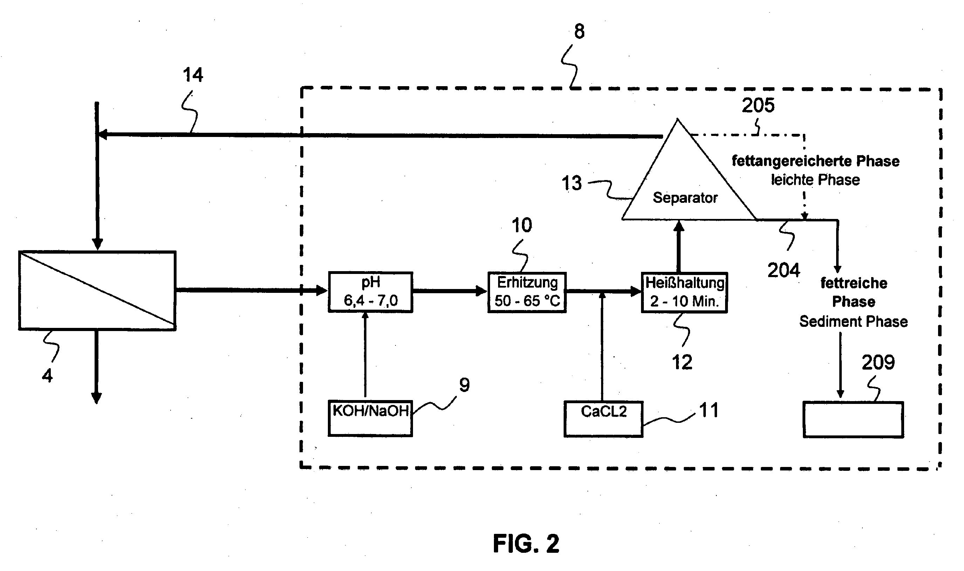

In Fig. 2 ist innerhalb eines durch eine gestrichelte Linie umrahmten Bereichs eine Ausführungsform des der Rezirkulation des fettreduzierten Teilstroms dienenden Teilkreislaufs in weiteren Einzelheiten veranschaulicht. Aus dieser Darstellung geht hervor, daß der pH-Wert des aus der Mikrofiltrationsstufe 4 entnommenen Retentatstroms durch eine Zugabe von Lauge, beispielsweise Kalilauge und/oder Natronlauge, aus einem Behälter 9 auf einen Wert im Bereich von 6,4 bis 7,0 erhöht wird. Die Temperatur des solchermaßen pHeingestellten Retentatstroms wird, beispielsweise im Durchlauf durch einen Plattenwärmeaustauscher 10, auf einen Temperaturwert im Bereich von 50 bis 65 °C erhitzt. Die bivalente Metallionenkonzentration des solchermaßen erhitzten Retentatstroms wird durch Zugabe von Kalziumchlorid aus einem Behälter 11 erhöht. Der solchermaßen erhitzte Retentatstrom erfährt, beispielsweise im Durchlauf durch eine Heißhaltestrecke 12, eine Heißhaltezeit von zwei bis zehn Minuten. Danach wird von dem heißgehaltenen Retentatstrom in einem Separator 13 der fettreduzierte Teilstrom 14 separiert, der zum Zulauf der Mikrofiltrationsstufe 14 rezirkuliert wird.

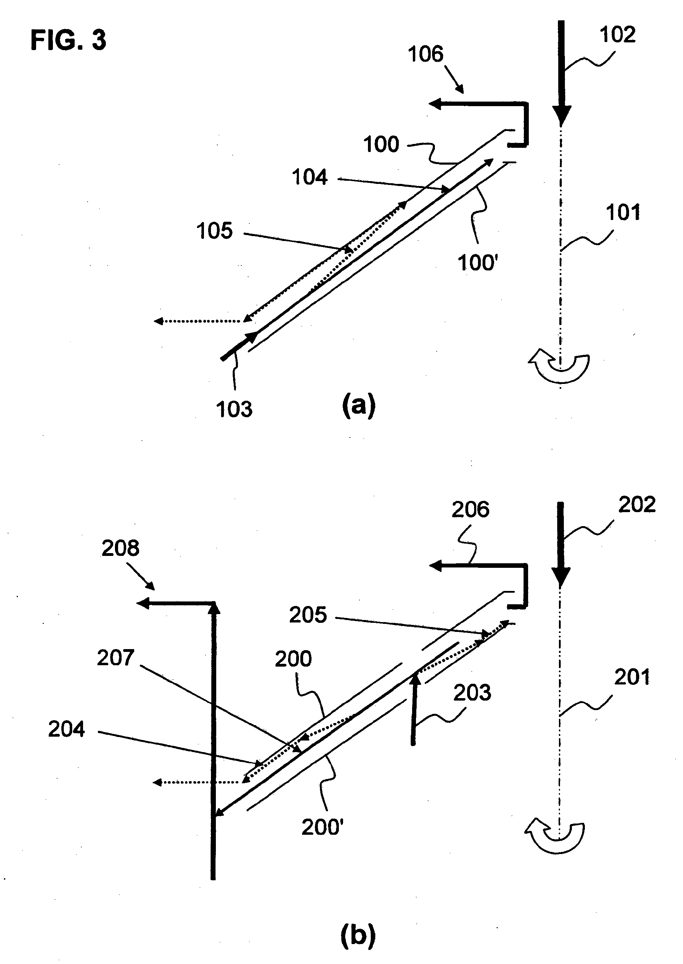

Der Tellerseparator kann ein Zweiphasen-Separator, der auch als Klärseparator bezeichnet wird, oder ein Dreiphasen-Separator, der auch als Trennseparator bezeichnet wird, sein. Das Funktionsprinzip der ersten Alternative ist in Fig. 3 (a) dargestellt, das der zweiten Alternative in Fig. 3 (b).

In Fig. 3 (a) sind schematisch zwei übereinanderliegende Teller 100, 100' des um die vertikale Rotationsachse 101 rotierenden Tellerpaketes des Klärseparators dargestellt. Das zu separierende, heißgehaltene Retentat wird in der Richtung des Pfeiles 102 axial von oben zugeführt und läuft dann von unten in der Richtung des Pfeils 103 in den zwischen den beiden Tellern 100, 100' begrenzten Tellerspalt ein. Während seines Durchlaufs durch den Tellerspalt längs des Weges 104 wird durch die Einwirkung der Zentrifugalkraft die fettreiche Phase absepariert und wandert längs des Weges 105 zu dem in Fig. 3a oberen Teller 100. Von dort gelangt es längs des Tellers 100 nach unten und wird schließlich von dem unteren Ende des Tellerspaltes entweder kontinuierlich durch Düsen oder diskontinuierlich durch zeitlich gesteuerte Entleerungen ausgetragen.

Am oberen Ende des Tellerspaltes wird die leichte, fettarme Phase 106 ausgetragen, die in Teilströmen zur Mikrofiltrationsstufe 4 rezirkuliert wird.

Beim Trennseparator, dessen Funktionsprinzip in Fig. 3 (b) schematisch veranschaulicht ist, erfolgt der Zulauf ebenfalls längs der Rotationsachse 201 des rotierenden Tellerpakets axial von oben in der Richtung des Pfeils 202. In den Tellern 200, 200' des Tellerpakets sind übereinanderliegende Öffnungen ausgebildet, die einen Steigkanal bilden. Durch diesen Steigkanal läuft das zulaufende, heißgehaltene Retentat längs des Pfeils 203 vertikal von unten nach oben in die zwischen den Tellern 200, 200' begrenzten Tellerspalte ein. Unter der Wirkung der Zentrifugalkraft wird eine fettreiche Phase in Richtung auf den in Fig. 3 (b) oberen Teller 200 abgetrennt und wandert an dessen Wandung längs eines Weges 204 zum unteren Ende des Tellerspaltes, wo sie entweder kontinuierlich durch Düsen oder diskontinuierlich durch zeitlich gesteuerte Entleerungen ausgetragen wird. Ferner wird eine fettangereicherte Phase in Richtung auf den in Fig. 3 (b) unteren Teller 200' absepariert und wandert an dessen Wandung längs eines Weges 205 zum oberen Ende des Tellerspaltes. Dort wird diese fettangereicherte, leichte Phase als kontinuierlicher Strom 206 ausgetragen. Die verbleibende fettarme Phase verläßt den Tellerspalt an dessen unterem Ende längs des Weges 207 als schwere Phase und wird als kontinuierlicher Strom 208 ausgetragen, welcher in Teilströmen zur Mikrofiltrationsstufe 4 rezirkuliert wird.

In Fig. 2 ist der Separator 13 beispielhaft als derartiger Trennseparator veranschaulicht. Der rezirkulierte Teilstrom 14 in Fig. 2 stellt die fettarme Phase des Trennseparators dar. Die Wege 204 und 205 der fettreichen bzw. fettangereicherten Phase münden in einen Lagertank 209. Von dort aus werden diese Phasen einer nicht dargestellten weiteren Verwendung zugeführt. Ebenfalls nicht dargestellt ist der Weg des Permeats der weiteren UItrafiltrationsstufe 7 und dessen weitere Verwendung.

### Verzeichnis der Bezugszeichen

- 1: Block (Molke)
- 2: Ultrafiltrationsstufe
- 3: Block
- 4: Mikrofiltrationsstufe
- 5: Separationsstufe
- 6: Rezirkulation
- 7: weitere Ultrafiltrationsstufe
- 8: Teilkreislauf
- 9: Behälter
- 10: Plattenwärmeaustauscher
- 11: Behälter
- 12: Heißhaltestrecke
- 13: Tellerseparator
- 14: fettreduzierter Teilstrom
- 100, 100': Teller
- 101: Rotationsachse
- 102: Pfeil
- 103: Pfeil
- 104: Weg
- 105: Weg der fettreichen Phase
- 106: leichte, fettarme Phase
- 200, 200': Teller
- 201: Rotationsachse
- 202: Pfeil
- 203: Pfeil
- 204: Weg der fettreichen Phase
- 205: Weg der fettangereicherten Phase
- 206: kontinuierlicher Strom
- 207: Weg
- 208: kontinuierlicher Strom
- 209: Lagertank

## Patentansprüche

1. Verfahren zur Gewinnung eines eiweißangereicherten Erzeugnisses aus einem als Retentat einer Ultrafiltration von Molke gewonnenen Molkenproteinkonzentrat, bei dem das Molkenproteinkonzentrat als Zulaufstrom einer Mikrofiltration (4) zugeführt und aus deren Permeatstrom das eiweißangereicherte Erzeugnis gewonnen wird, wobei von dem Retentatstrom der Mikrofiltration ein fettreduzierter Teilstrom (14) separiert und mindestens teilweise zu der Mikrofiltration rezirkuliert (6) wird, **dadurch gekennzeichnet, daß** die Menge des rezirkulierten Teilstroms (14) im Bereich von 25 bis 75 % der Menge des separierten Teilstroms liegt.

2. Verfahren nach Anspruch 1, **dadurch gekennzeichnet, daß** der mit dem rezirkulierten Teilstrom rezirkulierte Restfettgehalt durch die Mikrofiltration in deren Permeatstrom auf einen ihrem natürlichen Entfettungsgrad entsprechenden Bruchteil reduziert wird.

3. Verfahren nach Anspruch 2, **dadurch gekennzeichnet, daß** der natürliche Entfettungsgrad der Mikrofiltration im Bereich von 75 bis 80 % und der in ihr Permeat übergehende Bruchteil des rezirkulierten Restfettgehalts im Bereich von 20 bis 25 % liegt.

4. Verfahren nach einem der Ansprüche 1 bis 3, **dadurch gekennzeichnet, daß** vor der Separation des fettreduzierten Teilstroms der pH-Wert des Retentatstroms eingestellt, der in seinem pH-Wert eingestellte Retentatstrom erhitzt (10) und die bivalente Metallionenkonzentration des erhitzten Retentatstroms erhöht wird.

5. Verfahren nach Anspruch 4, **dadurch gekennzeichnet, daß** die Erhitzungstemperatur des Retentatstroms im Bereich von 50 bis 65 °C liegt.

6. Verfahren nach Anspruch 4 oder 5, **dadurch gekennzeichnet, daß** der erhitzte Retentatstrom durch eine Heißhaltestrecke (12) geführt wird.

7. Verfahren nach einem der Ansprüche 4 bis 6, **dadurch gekennzeichnet, daß** die Einstellung des pH-Wertes durch eine Zugabe von Lauge (9) erfolgt.

8. Verfahren nach einem der Ansprüche 4 bis 7, **dadurch gekennzeichnet, daß** die Einstellung des pH-Wertes auf einen Wert im Bereich von 6,4 bis 7,0 erfolgt.

9. Verfahren nach einem der Ansprüche 4 bis 8, **dadurch gekennzeichnet, daß** die Erhöhung der bivalenten Metallionenkonzentration durch eine Zugabe von Calciumchlorid (11) erfolgt.

10. Verfahren nach einem der Ansprüche 4 bis 9, **dadurch gekennzeichnet, daß** der fettreduzierte Teilstrom (14) aus einem Austragsstrom eines Tellerseparators (13) entnommen wird, dem der erhitzte Retentatstrom als Zulaufstrom zugeführt wird.

11. Verfahren nach Anspruch 10, **dadurch gekennzeichnet, daß** der Tellerseparator (13) ein Zweiphasen-Separator ist, dessen die leichte Phase (106) austragender Austragsstrom den fettreduzierten Teilstrom (14) liefert.

12. Verfahren nach Anspruch 10, **dadurch gekennzeichnet, daß** der Tellerseparator (13) ein Dreiphasen-Separator ist, dessen die schwere Phase austragender Austragsstrom (208) den fettreduzierten Teilstrom (14) liefert.

13. Verfahren nach einem der Ansprüche 1 bis 12, **dadurch gekennzeichnet, daß** das eiweißangereicherte Erzeugnis aus einem Retentatstrom einer weiteren Ultrafiltration (7) gewonnen wird, der der Permeatstrom der Mikrofiltration (4) als Zulaufstrom zugeführt wird.

## Claims

1. A method for obtaining an albumen-enriched product from a whey protein concentrate obtained as a retentate of an ultrafiltration of whey wherein the whey protein concentrate is supplied as a feed stream to a microfiltration (4) from the permeate stream of which the albumen-enriched product is obtained, a fat-reduced partial stream (14) being separated from the retentate stream of the microfiltration and being at least partially recirculated (6) to the microfiltration, **characterised in that** the amount of recirculated partial stream (14) is in the range of 25 to 75% of the amount of the separated partial stream.

2. The method according to Claim 1, **characterised in that** the residual fat content recirculated with the recirculated partial stream is reduced by the microfiltration in its permeate stream to a fraction corresponding to its natural degree of defatting.

3. The method according to Claim 2, **characterised in that** the natural degree of defatting of the microfiltration is in the range of 75 to 80% and the fraction of recirculated residual fat content passing into its permeate is in the range of 20 to 25 %.

4. The method according to any of Claims 1 to 3, **characterised in that** before the separation of the fat-reduced partial stream the pH value of the retentate stream is set, the retentate stream (10) with a set pH value is heated (10) and the bivalent metal ion concentration of the heated retentate stream is increased.

5. The method according to Claim 4, **characterised in that** the heating temperature of the retentate stream is in the range of 50 to 65°C.

6. The method according to Claim 4 or 5, **characterised in that** the heated retentate stream is guided through a hot holding section (12).

7. The method according to any of Claims 4 to 6, **characterised in that** the pH value is set by adding lye (9).

8. The method according to any of Claims 4 to 7, **characterised in that** the pH value is set to a value in the range of 6.4 to 7.0.

9. The method according to any of Claims 4 to 8, **characterised in that** the bivalent metal ion concentration is increased by adding calcium chloride (11).

10. The method according to any of Claims 4 to 9, **characterised in that** the fat-reduced partial stream (14) is removed from a delivery stream of a disc separator (13) to which the heated retentate stream is supplied as a feed stream.

11. The method according to Claim 10, **characterised in that** the disc separator (13) is a two-phase separator of which the delivery stream delivering the light phase (106) provides the fat-reduced partial stream (14)

12. The method according to Claim 10, **characterised in that** the disc separator (13) is a three-phase separator the delivery stream (208) of which delivering the heavy phase provides the fat-reduced partial stream (14).

13. The method according to any of Claims 1 to 12, **characterised in that** the albumen-enriched product is obtained from a retentate stream of a further ultrafiltration (7) to which the permeate stream of the microfiltration (4) is supplied as a feed stream.

## Revendications

1. Procédé d'obtention d'un produit enrichi en protéines à partir d'un concentré de protéines de lactosérum produit sous la forme d'un rétentat d'ultrafiltration de lactosérum, dans lequel le concentré de protéines de lactosérum est apporté à une microfiltration (4) sous la forme d'un courant d'alimentation et le produit enrichi en protéines est tiré du courant de perméat de celle-ci, moyennant quoi un flux partiel (14) à teneur réduite en matières grasses est séparé du courant de rétentat de la microfiltration et fait l'objet, au moins partiellement, d'une recirculation (6) vers la microfiltration, **caractérisé en ce que** la quantité de flux partiel (14) recirculé se situe dans la plage allant de 25 à 75 % de la quantité de flux partiel séparé.

2. Procédé selon la revendication 1, **caractérisé en ce que** la teneur en matières grasses résiduelles recirculées avec le flux partiel recirculé est réduite par la microfiltration dans son courant de perméat pour atteindre une fraction correspondant à son degré de dégraissage naturel.

3. Procédé selon la revendication 2, **caractérisé en ce que** le degré de dégraissage naturel de la microfiltration se situe dans la plage allant de 75 à 80 % et la fraction de la teneur en matières grasses résiduelles recirculée passant dans son perméat se situe dans la plage allant de 20 à 25 %.

4. Procédé selon l'une des revendications 1 à 3, **caractérisé en ce que**, préalablement à la séparation du flux partiel à teneur réduite en matières grasses, le pH du courant de rétentat est ajusté, ledit courant de rétentat à pH ajusté est chauffé (10) et la concentration en ions métalliques bivalents du courant de rétentat chauffé est intensifiée.

5. Procédé selon la revendication 4, **caractérisé en ce que** la température de chauffe du courant de rétentat se situe dans la plage allant de 50 à 65 °C.

6. Procédé selon la revendication 4 ou 5, **caractérisé en ce que** le courant de rétentat réchauffé est conduit dans une section de maintien en température (12).

7. Procédé selon l'une des revendications 4 à 6, **caractérisé en ce qu'**un ajustement du pH s'effectue par ajout de lessive (9).

8. Procédé selon l'une des revendications 4 à 7, **caractérisé en ce qu'**il est effectué un ajustement du pH à une valeur située dans la plage allant de 6,4 à 7,0.

9. Procédé selon l'une des revendications 4 à 8, **caractérisé en ce que** l'intensification de la concentration en ions métalliques bivalents s'effectue par ajout de chlorure de calcium (11).

10. Procédé selon l'une des revendications 4 à 9, **caractérisé en ce que** le flux partiel (14) à teneur réduite en matières grasses est tiré d'un courant de sortie issu d'un séparateur à disques (13) auquel est apporté le courant de rétentat chauffé en tant que courant d'alimentation.

11. Procédé selon la revendication 10, **caractérisé en ce que** le séparateur à disques (13) consiste en un séparateur à deux phases dont le courant de sortie porteur de la phase légère (106) fournit le flux partiel (14) à teneur réduite en matières grasses.

12. Procédé selon la revendication 10, **caractérisé en ce que** le séparateur à disques (13) consiste en un séparateur à trois phases dont le courant de sortie porteur de la phase lourde (208) fournit le flux partiel (14) à teneur réduite en matières grasses.

13. Procédé selon l'une des revendications 1 à 12, **caractérisé en ce que** le produit enrichi en protéines est produit à partir d'un courant de rétentat d'une autre ultrafiltration (7) à laquelle est apporté le courant de perméat de la microfiltration (4) en tant que courant d'alimentation.
